# EUROPÄISCHE PATENTSCHRIFT

(11) **EP 0 546 015 B1**
(45) Veröffentlichungstag und Bekanntmachung des Hinweises auf die Patenterteilung: **20.07.1994**
(21) Anmeldenummer: 91915478.1
(22) Anmeldetag: 03.09.1991
(51) Int. Cl.: B09B 3/00

(54) **VERFAHREN ZUR DEKONTAMINIERUNG VON SCHADSTOFFBELASTETEM, LOSEM, STÜCKIGEM GUT**
PROCESS FOR DECONTAMINATING LOOSE SUBSTANCES IN PIECES
PROCEDE DE DECONTAMINATION DE PRODUITS EN MORCEAUX EN VRAC CHARGES DE POLLUANTS

(30) Priorität: 05.09.1990 DE 9017732 U
(43) Veröffentlichungstag der Anmeldung: 16.06.1993
(73) Patentinhaber: ENVICON KLÄRTECHNIK VERWALTUNGSGESELLSCHAFT mbH, D-46526 Dinslaken (DE)
(72) Erfinder: PAPE, Stefan, D-4350 Recklinghausen (DE)
(74) Vertreter: Becker, Thomas, Dr., Dipl.-Ing.
(86) Internationale Anmeldenummer: DE9100706
(87) Internationale Veröffentlichungsnummer: WO9204138

(56) Entgegenhaltungen:
- EP-A- 0 379 121
- WO-A-90/07992
- DE-A- 3 720 833
- DE-A- 3 921 066
- DE-A- 3 938 464

## Beschreibung

Die Erfindung betrifft ein Verfahren zur Dekontaminierung von schadstoffbelastetem, losem, stückigem Gut wie Bauschutt.

Zum Beispiel im Bauwesen, und zwar sowohl im Hoch- wie Tiefbau oder Straßenbau fallen durch Neubau- oder Sanierungsmaßnahmen große Mengen an Bauschutt an. Häufig müssen auch Fundamente erneuert werden. Darüber hinaus fallen zum Beispiel im Bereich industrieller Anlagen häufig Reststoffe in stückiger Form an, die wie der vorstehend genannte Bauschutt mehr oder weniger mit Schadstoffen, zum Beispiel Kohlenwasserstoffen, verunreinigt sind.

Derartige, in loser stückiger Form von meist deutlich mehr als 5 cm Durchmesser vorliegende Teile sind grundsätzlich von einem Boden zu unterscheiden, wie er beispielsweise in kontaminierter Form unter Industriegeländen vorhanden ist und entsorgt / behandelt werden muß. Dies erfolgt entweder nach einem Ausbaggern in sogenannten Bodenwaschanlagen (DE 39 21 066 C2), oder in Regenerationsmieten (DE 39 01 050 A1) oder ohne Ausbaggern in situ. Dabei durchströmt das angehobene Grundwasser das Erdreich an Ort und Stelle. Eine Nährstofflösung wird dem Grundwasser zugeführt und an anderer Stelle über einen Brunnen wieder abgezogen.

Insbesondere bei dichten Körpern, wie Betonteilen, sind oft nur die Oberflächenbereiche des Stückgutes verunreinigt.

In diesem Zusammenhang ist es bekannt, die Oberflächen eines derartigen stückigen Materials durch Sandstrahlen zu behandeln. Abgesehen davon, daß auf diese Weise nur die unmittelbare Oberflächenschicht erreicht wird, hat das Verfahren den Nachteil, daß der ausgebrachte Sand anschließend selbst aufbereitet und entsorgt werden muß, zum Beispiel wieder mit einem Bodenwaschverfahren.

Eine weitere bekannte Maßnahme zur Reinigung der genannten Materialien besteht darin, diese zu zerkleinern und im Rahmen eines bekannten Boden-Waschverfahrens einer biologischen und/oder chemischen Waschwasserbehandlung zu unterwerfen. Ein solches Verfahren beschreibt auch die EP 0 379 121 A1, bei dem Erdreich, Schlamm und vorzerkleinerter Bauschutt in ein Silo gefüllt und im Kontakt mit zugeführter Biomasse durch Umwälzen behandelt wird. Es handelt sich also um eine Art Belebtschlammverfahren und -Anlage. Abgesehen von dem relativ komplizierten Verfahren besteht hier der wesentliche Nachteil darin, daß das gesamte Material zunächst aufbereitet und anschließend gereinigt werden muß, obwohl häufig - wie oben ausgeführt - nur der unmittelbare Oberflächenbereich oder eine gewisse Oberflächenschicht kontaminiert ist. Insoweit wird bei diesem Verfahren also ein erheblicher Aufwand getrieben, bei dem große Mengen nicht kontaminierter Bestandteile mit behandelt werden.

Es besteht aber ein dringendes Bedürfnis, derartige größere Stücke, die mit bekannten Böden-Reinigungsverfahren nicht zu reinigen sind, ebenfalls zu dekontaminieren und einer weiteren Verwendung zuzuführen.

Der Erfindung liegt insoweit die Aufgabe zugrunde, ein Verfahren zur Dekontaminierung von schadstoffbelastetem, lose vorliegendem, stückigem Gut anzubieten, das einfacher als die bekannten Verfahren ist und trotzdem eine möglichst vollständige Entfernung der im Oberflächenbereich des Stückgutes vorhandenen Schadstoffe ermöglicht.

Der Erfindung liegt der grundliegende Gedanke zugrunde, dies nach Art eines "umgekehrten Tropfkörperverfahrens" zu realisieren.

Beim Tropfkörperverfahren wird die Erhöhung der Biomassen-Konzentration im Reaktor durch die Bereitstellung von Aufwuchsflächen erreicht, auf denen die Organismen haften und durch den Abwasserstrom nicht beziehungsweise nur begrenzt ausgespült werden können. In Abhängigkeit von der Nährstoffzufuhr wächst der Biomassenbelag auf den Oberflächen zum sogenannten "biologischen Rasen" heran. Ein Teil des Belages wird durch den Abwasserstrom von der Unterlage abgelöst und ausgespült. Das abgezogene Abwasser wird anschließend in einem Nachklärbecken einer Sedimentationsbehandlung unterworfen.

Während also beim bekannten Tropfkörper-Verfahren ein kontaminiertes Abwasser dadurch gereinigt wird, daß Schadstoffe aus dem Abwasser in Anwesenheit von Mikroorganismen sich durch Bildung des genannten biologischen Rasens auf Festbetten abscheiden, die im Reaktor zur Verfügung gestellt werden, geht das erfindungsgemäße Verfahren den umgekehrten Weg.

Dem Verfahren liegt danach die Überlegung zugrunde, das stückige, kontaminierte Gut in loser Schüttung (ohne Feinanteile) mit einer Flüssigkeit zu besprühen oder in eine Flüssigkeit einzulegen, die einen Anteil an solchen Mikroorganismen enthält oder in der solche Mikroorganismen gebildet werden, die die organischen Schadstoffe zum Beispiel entweder oxidieren oder in körpereigene Substanz umwandeln. Auf diese Weise wird der "biologische Rasen" also quasi "in-situ" auf den Oberflächen des zu reinigenden Stückgutes gebildet.

Dadurch, daß - wie oben ausgeführt - die Schadstoffe bei dem erfindungsgemäß zu reinigenden stückigen Gut weitestgehend unmittelbar an der Oberfläche haften oder - bei einem porösen Gut - nur über eine bestimmte Tiefe von der Oberfläche im stückigen Gut enthalten sind, gelingt es bei Bereitstellung der genannten Flüssigkeit, die Mikroorganismen dazu anzuregen, die organischen Stoffe zu oxidieren oder in körpereigene Substanz umzuwandeln. Dabei haben Versuche gezeigt, daß die Mikroorganismen in der Lage sind, sich über eine gewisse Strecke in das zu entsorgende Gut "hineinzufüttern". Dies ist deshalb überraschend, weil man beim Tropfkörperverfahren stets eine bestimmte anaerobe Zwischenschicht auf den Aufwuchsflächen voraussetzt, die hier einer notwendigen aeroben Biologie entgegenstehen würde.

Die Tätigkeit der Mikroorganismen unmittelbar auf der Oberfläche selbst oder in einem bestimmten Diffusionsbereich reicht aus, um im Oberflächenbereich vorhandene Schadstoffe vollständig umzusetzen.

Anzahl und Art der Mikroorganismen wird anhand des zu entsorgenden Gutes beziehungsweise der vorhandenen Schadstoffe ausgewählt (selektiert). Dabei werden die Mikroorganismen zu einem überwiegenden Teil in der Regel aus Aerobiern bestehen.

In diesem Zusammenhang ist es wichtig, ein ausreichendes Sauerstoffangebot zur Verfügung zu stellen. Insbesondere bei einer reinen Besprühung des stückigen Gutes mit Flüssigkeit oder bei einem nur geringen Flüssigkeitsniveau im Behandlungsbehälter kann die Saugwirkung bei der Abwicklung der biologischen Vorgänge auf den Sauerstoff der Außenluft ausreichen, genügend Sauerstoff in die Flüssigkeit und damit in den Oberflächenbereich der stückigen Güter zu führen.

Nach einer vorteilhaften Ausführungsform ist jedoch vorgesehen, diskrete Belüftungselemente zur Verfügung zu stellen, die externen Sauerstoff in beziehungsweise auf die Flüssigkeit bringen. Hierzu stehen bekannte Belüfter zur Verfügung. Der Sauerstoff wird dabei in der Regel in Form von Umgebungsluft eingebracht. Ebenso kann der Sauerstoff aber auch schon vorher in die Flüssigkeit eingebracht oder in dieser gelöst werden.

Die Aufgabe der Flüssigkeit mit dem genannten Anteil an Nährlösung erfolgt nach einer vorteilhaften Ausführungsform der Erfindung über eine Sprüh- oder Sprenklereinrichtung.

Dabei kann das stückige Gut entweder zunächst in den leeren Behälter eingefüllt werden, wobei das Gut anschließend mit der Flüssigkeit von oben besprüht wird, das Gut kann aber auch in einen bereits mit der Flüssigkeit zumindest teilweise gefüllten Behälter eingegeben werden, wobei die Flüssigkeit das Gut überdecken sollte.

Bei einer kontinuierlichen Besprühungen des Gutes wird überschüssige Flüssigkeit am unteren Ende des Behandlungsbehälters abgezogen.

In der abgezogenen Flüssigkeitsmenge wird sich dann auch ein Teil der Biomasse befinden, so daß die Flüssigkeit anschließend vorzugsweise einer Nachbehandlung, zum Beispiel einer Sedimentationsbehandlung, unterworfen wird.

Die Behandlungsdauer des stückigen Gutes im Behandlungsbehälter hängt von der Art und Menge der Schadstoffe ab. Sie hängt auch davon ab, ob das stückige Gut in einer stehenden Flüssigkeit verbleibt oder kontinuierlich neue Mikroorganismen über neue Flüssigkeit zugeführt werden.

Ist das stückige Gut - was durch Versuche empirisch ermittelt werden kann - soweit aufbereitet, daß die Schadstoffe durch die Bakterien oxidiert oder in körpereigene Substanz umgewandelt worden sind, wird das stückige Gut aus dem Behälter entnommen. Die an den Oberflächen des stückigen Gutes anhaftende Biomasse ist in der Regel schadlos. Es ist aber ohne weiteres möglich und nach einer vorteilhaften Ausführungsform der Erfindung vorgesehen, das Stückgut anschließend mit einer weiteren Flüssigkeit, zum Beispiel Frischwasser, abzuspülen und die dabei entstehende Abwassermenge nachzuklären, zum Beispiel wieder durch eine Sedimentationsbehandlung.

Das stückige Gut kann in relativ großen Brocken aufgegeben werden. Vorzugsweise wird das stückige Gut in einer Fraktion zwischen 5 und 50 cm aufgegeben, wie es typischerweise auch als Bauschutt anfällt. Feinanteile werden zuvor abgetrennt und können in einer Bodenwäsche behandelt werden.

Das vorstehende Verfahren kann sowohl kontinuierlich als auch diskontinuierlich gestaltet werden. Ein diskontinuierliches Verfahren ergibt sich dann, wenn das zu reinigende Material in einen üblichen Behälter gegeben wird. Um ein kontinuierliches Verfahren zu bewerkstelligen, kann der Behälter zum Beispiel in Form eines geneigten Rohres gestaltet sein, der zumindest teilweise in die beschriebene Flüssigkeit eintaucht, wobei das Material am höhergelegenen Ende aufgegeben wird und sich mit der Drehung des Behälters nach und nach zum tieferen Ende bewegt, wo es schließlich nach Abschluß der biologischen Vorgänge abgezogen und auf die zuvor beschriebene Art und Weise weiterbehandelt wird.

Aus vorstehenden Ausführungen ergibt sich bereits der grundsätzliche Aufbau einer zur Ausübung des erfindungsgemäßen Verfahrens vorgesehenen Vorrichtung.

Im einfachsten Fall besteht diese aus einem Behandlungsbehälter, der bodenseitig eine Auflagefläche für das zu behandelnde stückige Gut und eine Zuführeinrichtung für die mit Mikroorganismen beladene Flüssigkeit aufweist.

In diesem Fall wird die Flüssigkeit und das stückige Gut nach der Behandlung aus dem Behälter entnommen.

Über eine Abzugseinrichtung im Behälter kann überschüssige Flüssigkeit abgezogen werden.

Um eine ausreichende Sauerstoffmenge zur Verfügung zu stellen, können wand- oder bodenseitig entsprechende Belüfter angeordnet werden, die Sauerstoff, insbesondere in Form von Umgebungsluft, in die Flüssigkeit oder auf die mit der Flüssigkeit benetzten Stücke blasen.

Dabei bietet sich vor allem eine Ausführungsform an, bei der das stückige Gut auf einem bodenseitigen Rost aufliegt und die Belüfter unterhalb des Rostes angeordnet sind und die Luft nach oben durch den Rost abgeben.

Die Ausbildung der Zuführeinrichtung für die Flüssigkeit in Form von Sprühdüsen oder Sprenklereinrichtungen wurde bereits vorstehend beschrieben.

Dies gilt auch für die Ausbildungsform der Vorrichtung in Form eines drehbaren Rohres, um ein kontinuierliches Verfahren ausüben zu können. In diesem Fall ist die Rohrwandung porös, also mit Durchbrechungen ausgebildet, so daß die Flüssigkeit, in die das Rohr eintaucht, in das Rohrinnere und damit in den Bereich des zu reinigenden stückigen Gutes gelangt.

Auch hier kann eine gewisse Flüssigkeitsströmung eingestellt werden, um stets frische Mikroorganismen an das zu entsorgende Gut zu bringen und eine Verstopfung des Systems zu verhindern.

Die Erfindung wird nachstehend anhand eines Ausführungsbeispieles näher erläutert.

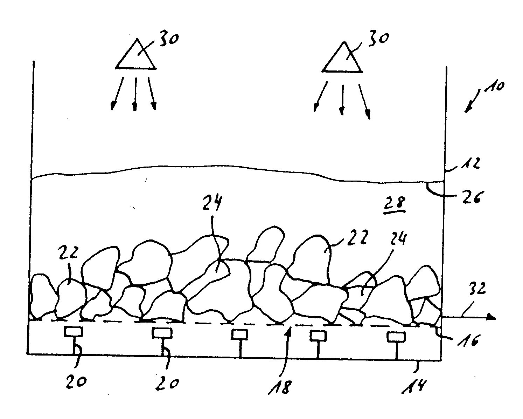

In der Figur ist mit dem Bezugszeichen 10 ein Behandlungsbehälter dargestellt, der eine zylindrische Wand 12 und einen Boden 14 aufweist. Oberhalb des Bodens 14 verläuft ein horizontal angeordneter Rost 16 mit Öffnungen 18. Unterhalb des Rostes 16 sind eine Reihe von Belüftern 20 angeordnet.

Auf dem Rost 16 liegen vorzerkleinerte Betonstücke 22 der Fraktion 5 - 30 cm in Form einer losen Schüttung auf. Zwischen den einzelnen Stücken 22 sind Hohlräume 24 ausgebildet.

Mit dem Bezugszeichen 26 ist das Niveau einer im Behälter 10 vorhandenen Flüssigkeit 28 dargestellt, die kontinuierlich über Düsen 30, die oberhalb des Flüssigkeitsniveaus 26 angeordnet sind, nachgeführt wird. Gleichzeitig wird über eine Abzugsleitung 32, die in geringem Abstand oberhalb des Rostes 16 in der Wand 12 angeordnet ist, eine entsprechende Flüssigkeitsmenge aus dem Behälter 10 weggeführt.

Die Flüssigkeit 28 ist mit aeroben Mikroorganismen beladen, die die auf den Betonstücken 22 oberflächlich oder im Oberflächenbereich aufsitzenden oder befindlichen organischen Stoffe teils oxidieren, teil in körpereigene Substanz umwandeln und so zur Ausbildung eines biologischen Rasens auf den Oberflächen der Betonstücke führen.

Nachdem die Mikroorganismen die organischen Schadstoffe aufgenommen haben, werden die im Behälter 10 befindlichen Betonstücke 22 aus dem Behälter 10 herausgenommen und mit Frischwasser abgespült, so daß die Biomasse sich anschließend im Abwasser befindet, das anschließend einer Nachklärung (Sedimentationsbehandlung) unterworfen wird. Die im Behälter 10 befindliche Flüssigkeit kann entweder anschließend zur Reinigung neu aufgegebenen stückigen Gutes genutzt werden; sie kann aber auch - bei Bedarf - aus dem Behälter, zum Beispiel über die Leitung 32, entfernt und durch neue Flüssigkeit ersetzt werden.

Während der Behandlung wird die Flüssigkeit 28 und das darin befindliche stückige Gut 22 kontinuierlich von den Belüftern 20 mit Sauerstoff durchspült, so daß die Aerobier genügend Sauerstoff zur Veratmung zur Verfügung haben.

Anstelle einer ständigen Überdeckung des stückigen Gutes mit der Flüssigkeit kann dieses auch über die Düsen 30 kontinuierlich mit Flüssigkeit besprüht werden. Über die Leitung 32 wird wiederum überschüssige Flüssigkeit aus dem Behälter abgezogen.

Mit dem erfindungsgemäßen Verfahren entfällt die im Stand der Technik teilweise notwendige feine Zerkleinerung und anschließende Bodenwäsche. Trotzdem wird das Material vollständig im Oberflächenbereich, also dort, wo die Schadstoffe sich befinden, gereinigt. Selbst bei porösem Material hat sich gezeigt, daß die Mikroorganismen sich über eine gewisse Strecke in das Innere des Stückgutes hineinfuttern und anschließend wieder aus den Poren herausquellen, so daß auch Bereiche unterhalb der Oberfläche auf die beschriebene Art und Weise dekontaminiert werden können.

## Patentansprüche

1. Verfahren zur Dekontaminierung von schadstoffbelastetem, losem, stückigem Gut, insbesondere Bauschutt, mit folgenden Schritten:
1.1 das stückige Gut wird, ggf. nach Trennung von bodenartigen Feinanteilen, in einen Behandlungsbehälter eingeführt, wobei
1.2.1 der Behandlungsbehälter zuvor zumindest teilweise mit einer Flüssigkeit gefüllt wurde und/oder
1.2.2 der Behandlungsbehälter danach (weiter) zumindest teilweise mit einer Flüssigkeit gefüllt wird, und/oder
1.2.3 das stückige Gut anschließend mit einer Flüssigkeit besprüht wird, die
1.3 einen Anteil an Mikroorganismen enthält, oder in der solche Mikroorganismen gebildet werden, die die organischen Schadstoffe im Oberflächenbereich des kontaminierten Guts entweder oxidieren oder in körpereigene Substanz umwandeln, unter Ausbildung eines biologischen Rasens auf der Oberfläche des stückigen Gutes, wobei
1.4 gleichzeitig und/oder anschließend Sauerstoff in oder auf die Flüssigkeit gebracht wird,
1.5 die Verweilzeit des zu entsorgenden stückigen Guts im Behandlungsbehälter wird so gewählt, bis der gewünschte Dekontaminierungsgrad erreicht ist, bevor
1.6 das gereinigte stückige Gut aus dem Behälter entnommen wird.

2. Verfahren nach Anspruch 1, bei dem die Flüssigkeit über eine Sprenklereinrichtung aufgegeben wird.

3. Verfahren nach Anspruch 1 oder 2, bei dem der Behandlungsbehälter bis zu einem das stückige Gut vollständig abdeckenden Niveau gefüllt und danach am unteren Ende des Behälters jeweils eine solche Menge der Flüssigkeit abgezogen wird, die der neu aufgegebenen Menge entspricht.

4. Verfahren nach einem der Ansprüche 1 bis 3, bei dem das stückige Gut in einer Fraktion größer 5 cm aufgegeben wird.

5. Verfahren nach einem der Ansprüche 1 bis 4, bei dem das stückige Gut beziehungsweise die Flüssigkeit von unten oder von der Seite über Belüfter mit Sauerstoff beaufschlagt wird (werden).

6. Verfahren nach einem der Ansprüche 1 bis 5, bei dem der Sauerstoff in Form von Umgebungsluft eingebracht wird.

7. Verfahren nach einem der Ansprüche 1 bis 6, wobei das aus dem Behandlungsbehälter abgezogene stückige Gut anschließend durch Abspritzen mit Frischwasser oder Abblasen mit Luft von oberflächlich anhaftender Biomasse befreit und das dabei entstehende Abwasser, gegebenenfalls mit etwaig vorher aus dem Behandlungsbehälter abgezogener Flüssigkeit, gereinigt wird.

8. Verfahren nach einem der Ansprüche 1 bis 7, bei dem das stückige Gut während der Verweilzeit im Behandlungsbehälter kontinuierlich entlang einer vorgegebenen Transportrichtung bewegt und am Ende der Transportstrecke als gereinigtes Material abgezogen wird, während gleichzeitig eine der entnommenen Menge entsprechende Menge an verunreinigtem stückigen Gut am eingabeseitigen Ende des Behandlungsbehälters kontinuierlich nachgefüllt wird.

## Claims

1. Process for decontamination of a loose lumpy material, including harmful substances, especially construction residues, including the following steps:
1.1 the loose material is transported into a treating chamber, after separation of ground-like fine parts, if necessary,
1.2.1 previously the treating chamber has been filled at least partially with a fluid and/or
1.2.2 the treating chamber is (further) filled thereafter at least partially with a fluid and/or
1.2.3 the lumpy material is sprayed therafter with a fluid,
1.3 said fluid including such microorganism oder in which such microorganism may be formed, being able to oxidise said organic harmful substances at their outer surface or to transform said harmful substances into endogenous substance, while forming a biological grass on said surface of said lumpy material,wherein
1.4 oxygene is introduced into or put onto the said fluid simultaneously and/or thereafter,
1.5 the treating time of the material to be disposed is dependent on the degree of decontamination required, and then
1.6 the purified lumpy material is taken off the treating chamber.

2. Process according to claim 1 wherein the fluid is sprayed by a sprinkler unit.

3. Process according to claim 1 or 2, wherein the treating chamber is filled up to a level according to which the lumpy material is fully covered, while thereafter the fluid is taken off at the lower part of the treating chamber in such an amount which equals the newly added fluid quantity.

4. Process according to one of claims 1 to 3, wherein the lumpy material is added in a fraction of greater than 5 cm.

5. Process according to one of claims 1 to 4, wherein the lumpy material or the fluid respectively is pressurized with oxygene from below or from one side.

6. Process according to one of claims 1 to 5, wherein oxygene is taken in as ambient air.

7. Process according to one of claims 1 to 6, wherein the lumpy material, taken off from the treating chamber, is freed of any biological material, sticking on its surface, by washing with water or air and that the so formed waste water is cleaned with fluid extracted from the treating chamber, if appropriate.

8. Process according to one of claims 1 to 7, wherein the lumpy material to moved continously along a predetermined transport direction during its stay within said treating chamber and taken off as a purified material at the end of said transport way while at the same time interval an amount of contaminated lumpy material corresponding to the amount taken off is added at the entrance end of said treating chamber continously.

## Revendications

1. Procédé de décontamination de produits en morceaux en vrac chargés de polluants, en particulier de gravats, comportant les étapes suivantes :
1.1 Le produit en morceaux est, le cas échéant, après séparation des fines provenant du sol, introduit dans un récipient de traitement,
1.2.1 le récipient de traitement est auparavant rempli au moins partiellement avec un liquide et/ou
1.2.2. le récipient de traitement est ensuite (de nouveau) rempli au moins partiellement avec un liquide, et/ou
1.2.3. le produit en morceaux est ensuite aspergé avec un liquide qui
1.3. contient une proportion de micro-organismes, ou dans lequel sont formés des micro-organismes qui oxydent les substances organiques nocives situées dans la zone de la surface du produit contaminé, ou les convertissent en une substance présentant une spécificité physique, en constituant un gazon biologique à la surface du produit en morceaux,
1.4 de l'oxygène est introduit simultanément et/ou ensuite dans ou sur le liquide,
1.5 le temps de séjour, dans le récipient de traitement, du produit en morceaux à décontaminer est choisi de façon à atteindre le degré de décontamination souhaité, avant que
1.6 le produit en morceaux épuré soit prélevé du récipient.

2. Procédé selon la revendication 1, selon lequel le liquide est appliqué par l'intermédiaire d'un dispositif de projection.

3. Procédé selon la revendication 1 ou 2, selon lequel le récipient de traitement est rempli jusqu'à un niveau recouvrant complètement le produit en morceaux, puis une quantité de liquide correspondant à la quantité de liquide nouvellement appliquée est chaque fois prélevée à l'extrémité inférieure du récipient.

4. Procédé selon l'une des revendications 1 à 3, selon lequel le produit en morceaux est appliqué en une granulométrie supérieure à 5 cm.

5. Procédé selon l'une des revendications 1 à 4, selon lequel le produit en morceaux, et/ou le liquide, est (sont) exposé(s) à l'oxygène, par le dessous ou par le côté, par l'intermédiaire d'aérateurs.

6. Procédé selon l'une des revendications 1 à 5, selon lequel l'oxygène est introduit sous forme d'air ambiant.

7. Procédé selon l'une des revendications 1 à 6, selon lequel le produit en morceaux extrait du récipient de traitement est ensuite débarrassé, par aspersion avec de l'eau neuve, ou bien par soufflage d'air, de la biomasse adhérant en surface, et les eaux usées alors produites sont, le cas échéant, épurées avec le liquide ayant été extrait auparavant du récipient de traitement.

8. Procédé selon l'une des revendications 1 à 7, selon lequel le produit en morceaux est déplacé pendant le temps de séjour dans le récipient de traitement, de façon continue, suivant une direction de transport prédéterminée et extrait, à l'extrémité du trajet de transport, sous forme de matériau épuré, tandis que, simultanément, une quantité, correspondant à la quantité prélevée, de produits en morceaux souillés est ajoutée en continu, pour reconstituer le remplissage, à l'extrémité située du côté introduction du récipient de traitement.
